# FASCICULE DE BREVET EUROPEEN

(11) **EP 1 267 633 B1**
(45) Date de publication et mention de la délivrance du brevet: **01.10.2003**
(21) Numéro de dépôt: 01913990.6
(22) Date de dépôt: 13.03.2001
(51) Int. Cl.: A23G 3/28, A23G 3/20, A23G 3/02, A23G 9/28, A23P 1/08, A21C 15/00

(54) **PROCEDE ET DISPOSITIF DE DEPOSE D'UN PRODUIT ALIMENTAIRE SUR UNE SURFACE**
VERFAHREN UND VORRICHTUNG ZUR ABLAGERUNG VON LEBENSMITTELPRODUKTEN AUF EINER FLÄCHE
METHOD AND DEVICE FOR DEPOSITING A FOOD PRODUCT ONTO A SURFACE

(30) Priorité: 27.03.2000 FR 0003834
(43) Date de publication de la demande: 02.01.2003
(73) Titulaire: LU France, 91130 Ris Orangis (FR)
(72) Inventeur: BEROS, Jean, F-91210 Draveil (FR); GOETHALS, René, B-2200 Herentals (BE); NOWICKI, Marcel, F-77930 Saint-Sauveur-sur-Ecole (FR)
(74) Mandataire: Jacquard, Philippe Jean-Luc
(86) Numéro de dépôt international: FR0100737
(87) Numéro de publication internationale: WO01072137

(56) Documents cités:
- EP-A- 0 668 021
- FR-A- 2 328 407
- GB-A- 1 073 890
- GB-A- 2 230 057
- US-A- 3 632 021
- US-A- 3 760 745
- US-A- 4 088 249
- US-A- 5 439 146

## Description

La présente invention a pour objet un procédé de dépose sur une surface, d'un produit alimentaire pompable non-liquide, ainsi qu'un dispositif pour sa mise en oeuvre.

La dépose d'un produit alimentaire non-liquide tel qu'une crème, une crème foisonnée, une pâte foisonnée, une génoise ou un fourrage sur un support peut être réalisée par divers procédés connus.

Un procédé connu consiste à délivrer le produit en l'extrudant a partir d'une buse. Un tel procédé présente l'inconvénient d'une mise en pression du produit et d'un cisaillement de celui-ci, ce qui fait qu'il influe sur la texture et qu'en particulier il ne convient pas à la dépose de produits tels que des crèmes ou des crèmes foisonnées qui s'avèrent très sensibles à des sollicitations mécaniques.

Un autre procédé connu est celui dit du stencil qui consiste à délivrer une crème à une plaque de stencil qui porte une ouverture correspondant à la dimension de la plaquette de crème à déposer sur un support tel qu'un biscuit. Un déplacement relatif de la plaque de stencil par rapport au dispositif d'alimentation et un démoulage ultérieur de la crème permettent d'obtenir le produit désiré.

Ce procédé, tout satisfaisant qu'il soit au niveau des principes, nécessite une mécanisation compliquée qui augmente les coûts de fabrication et diminue les cadences de production.

La présente invention propose pour but un procédé et un dispositif pour sa mise en oeuvre qui permettent de réaliser la dépose d'un produit alimentaire pâteux, semi-pâteux, ou semi-liquide, défini comme étant un produit pompable non-liquide, sur un support tel qu'un biscuit ou bien un tapis en déplacement, sans soumettre le produit à des contraintes mécaniques susceptibles d'en affecter la texture, tout en permettant une cadence de production élevée.

L'invention concerne ainsi un procédé de dépose sur une surface d'un produit alimentaire pompable non-liquide caractérisé en ce qu'il met en oeuvre un cycle comprenant :
- une diminution d'une quantité déterminée du volume d'une tête de dépose présentant au moins un orifice de dépose, de manière à délivrer une quantité calibrée du produit alimentaire ;
- une augmentation de ce volume de la même quantité déterminée pour revenir au volume de départ,
- et en ce que la tête de dépose est alimentée en continu par ledit produit alimentaire à un débit correspondant aux quantités délivrées lors des cycles successifs.

Dans ces conditions, la dépose du produit s'effectue grâce à un effet purement volumétrique à travers un ou plusieurs orifices de dépose, et sans que le produit soit soumis à une élévation de pression, comme ce serait le cas dans un dispositif d'extrusion. En outre, l'alimentation en continu, par exemple à l'aide d'une pompe, permet d'assurer en choisissant correctement le débit, un cycle de dépose à une cadence déterminée.

Il est avantageux que la tête de dépose présente une région de canal, de préférence un soufflet, dont la longueur peut être modifiée pour assurer ladite diminution ou ladite augmentation de volume

La dépose peut être réalisée sur une surface en mouvement, et dans ce cas la tête de dépose peut être animée d'un mouvement qui lui permet de suivre le déplacement de la surface en mouvement au moins au moment de la dépose. Ce mouvement de la tête de dépose peut être en particulier un mouvement de balancier dont la période est égale à la période d'un cycle de dépose.

La dépose peut s'effectuer directement sur un tapis de dépose, ou bien sur un support alimentaire tel qu'un biscuit, une gaufrette, etc....

Dans ce cas, le procédé peut comporter une étape de dépose d'un deuxième support alimentaire sur le produit alimentaire, pour réaliser un produit de type sandwich, par exemple un sandwich de crème entre deux biscuits ou deux gaufrettes.

Sur un premier mode de réalisation, lors de la dépose la distance entre la tête de dépose et ladite surface est telle que le produit déposé forme au moins un dôme qui se sépare de la tête de dépose lors de la remontée de celle-ci. Selon un deuxième mode de réalisation préféré, la dépose s'effectue avec une distance entre la tête de dépose et ladite surface qui est telle que la quantité délivrée est confinée sous forme d'une galette dont la hauteur est sensiblement égale à ladite distance entre la tête de dépose et ladite surface. Après la dépose, ladite galette peut être séparée de la tête de dépose à l'aide d'un coupe-fil.

L'invention concerne également un dispositif de dépose sur une surface d'un produit alimentaire pompable non-liquide à l'aide d'une tête de dépose, caractérisée en ce que la tête de dépose présente un dispositif d'actionnement pour faire varier d'une quantité déterminée le volume de la tête de dépose selon un cycle comprenant successivement une diminution et une augmentation de ladite quantité déterminée du volume de la tête de dépose, de manière à délivrer lors de chaque cycle ladite quantité déterminée dudit produit alimentaire et en ce qu'il présente un dispositif d'alimentation en continu de la tête de dépose par ledit produit alimentaire, à un débit correspondant aux quantités délivrées lors des cycles successifs.

La tête de dépose présente avantageusement une région de canal de longueur variable, comportant de préférence un soufflet, et coopérant avec ledit dispositif d'actionnement pour réaliser ladite variation de volume.

Le dispositif d'actionnement peut présenter un plateau mobile en translation, coopérant avec la tête de dépose pour en faire varier le volume. Ce plateau mobile peut être commun à au moins deux dispositifs de dépose, par exemple situés sur une même rangée.

Le dispositif de dépose peut être disposé à proximité d'une surface en mouvement sur laquelle doit être effectuée ladite dépose. Ce dispositif peut alors comporter un dispositif d'entraînement pour imprimer à la tête de dépose un mouvement de balancier de sorte que la tête de dépose suive le déplacement de ladite surface en mouvement, au moins lors de la dépose. Le dispositif peut comporter un coupe-fil permettant de séparer de la tête de dépose du produit déposé.

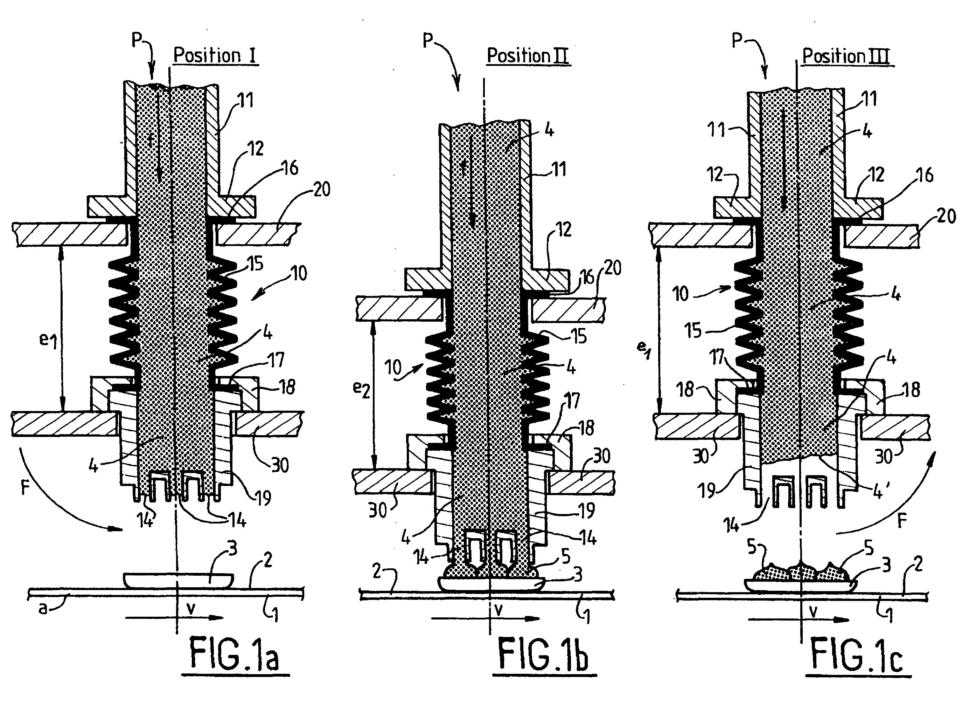

D'autres caractéristiques et avantages de l'invention apparaîtront à la lecture de la description qui va suivre, en liaison avec les dessins annexés dans lesquels :
- les figures1a à 1c représentent trois positions caractéristiques d'un premier mode de réalisation d'un dispositif de mise en oeuvre du procédé selon l'invention ;
- et les figures 2a à 2c représentent trois positions caractéristiques d'un mode de réalisation préféré d'un dispositif pour la mise en oeuvre du procédé selon l'invention.
- Selon les figures 1a à 1c un canal 11 est alimenté en continu par une pompe P en un produit alimentaire 4 pompable non-liquide. On peut définir le produit comme étant pâteux, semi-pâteux ou bien semi-liquide, c'est-à-dire que sa viscoélasticité est telle, qu'une fois déposé sur une surface, il conserve une forme définie, sans écoulement notable, tant qu'il n'est pas soumis à des sollicitations mécaniques. Le canal d'amenée 11 présente une bride 12 de montage sur une platine 20. Une collerette 16 d'un soufflet 15 est prise entre la bride 12 et la platine 20. Le soufflet 15 prolonge le canal 11 pour former une tête de dépose 10 qui comprend également une buse de dépose 19 pourvue d'une ou plusieurs ouvertures 14 ayant par exemple plusieurs mm de diamètre. Le soufflet 15 présente une collerette 17 emprisonnée entre une bride 18, montée sur une platine 30 mobile par rapport à la platine 20, et le corps 19 de la buse de dépose. La platine mobile 30 est susceptible de se déplacer par rapport à la platine 20 d'un mouvement de va-et-vient vertical de manière à faire varier de manière contrôlée la distance e entre les platines 20 et 30 entre une valeur maximale e1 (figure 1a) et une valeur minimale e2(figure 1b).

Le mode de réalisation représenté aux figures 1a à 1c est destiné à la dépose du produit 4 sur un biscuit 3 posé sur la face supérieure 2 d'un tapis se déplaçant horizontalement dans le sens de la flèche V, et à cet effet, la platine 20 qui porte un ou plusieurs tubes d'amenée de produit, par exemple destinés à une rangée de biscuits 3, est animée d'un mouvement pendulaire représenté par la flèche F, ce mouvement lui permettant de se synchroniser avec le déplacement du tapis 1 et d'être disposé au-dessus du biscuit 3 avec la même vitesse que celui-ci au moment de la dépose. Après la dépose, le mouvement pendulaire se poursuit par un mouvement de retour et le cycle recommence.

Le corps 19 de la tête de dépose est ainsi animé d'un mouvement combiné, à savoir la combinaison du mouvement pendulaire qui est celui de la platine 20, et du mouvement de va-et-vient qui est celui de la platine 30 lors de la dépose.

A la position I représentée à la figure 1a, la distance entre les platines 20 et 30 est égale à la valeur maximale e1 et on voit que le produit 4 à distribuer remplit entièrement la tête de dépose jusqu'aux ouvertures 14.

Le mouvement pendulaire se poursuit avec un rapprochement rapide de la platine 20 du tapis 1 et la platine 20 est rapprochée de la platine 30 de sorte que leur distance maintenant égale à e2 qui est inférieure à e1 d'une distance qui correspond à la quantité de produit 4 à déposer sur le biscuit 3 (position II représentée à la figure 1b).

Ensuite, le mouvement pendulaire se poursuivant, la tête de dépose s'écarte de nouveau du biscuit 3 et l'écart entre les platines 30 et 20 est rétabli à la valeur maximale e1.

Dans ces conditions, le niveau inférieur du produit 4, représenté à la figure 1c par le repère 4' (position III), est en amont des ouvertures 14, puisque, par effet de la variation de volume provoquée par la compression-expansion du soufflet 15, du produit 4 a été déposé en 5 sur le biscuit 3 et la quantité correspondante manque à présent dans la tête de dépose à la position 3. Ce volume manquant est compensé grâce au fait que la pompe d'alimentation p approvisionne de manière continue la tête de dépose 10 avec un débit qui est choisi de manière que, lorsque la tête de dépose sera revenue à la position I pour un nouveau cycle de dépose, le produit 4 viendra de nouveau affleurer les ouvertures 14.

Le cycle de dépose qui vient d'être décrit permet de ne pas soumettre le produit 4 à une mise en pression ou à un cisaillement puisque la dépose s'effectue par simple effet de variation de longueur d'une section tubulaire de la tête de dépose et que le produit 4 s'écoule à travers une ou plusieurs ouvertures 14 dont la dimension (en pratique quelques millimètres), est suffisante pour éviter une mise en pression et/ou un cisaillement du produit 4. En outre, l'approvisionnement continu du produit 4 par la pompe P peut être facilement effectué sans détériorer les qualités de texture de celui-ci.

Le procédé peut donc être utilisé avec tout type de crème ou de produit pâteux, semi-pâteux ou semi-liquide et en particulier des produits fragiles tels que les produits foisonnés qui présentent une texture légère et moussante particulièrement vulnérable aux sollicitations mécaniques de cisaillement.

Après l'étape de dépose du produit 4 sous forme d'îlots 5 ou bien de couronne annulaire, il est possible d'appliquer un deuxième biscuit 3 par-dessus la couche de crème 5 pour former un sandwich. Du fait que le produit 4 a été déposé sous forme de couronne ou d'îlots formant un ou plusieurs dômes, le biscuit supérieur 3 vient se positionner à plat sensiblement parallèle au biscuit inférieur 3 et il suffit d'appuyer légèrement sur le biscuit supérieur pour obtenir l'étalement désiré du produit 5 déposé.

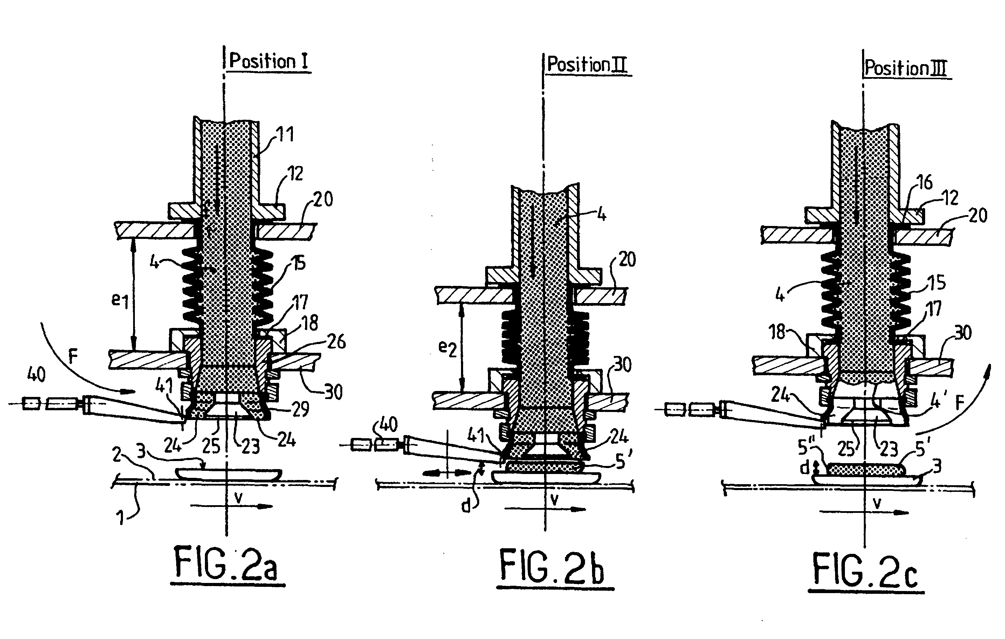

Le procédé illustré aux figures 2a à 2c se distingue du procédé précédent par certaines caractéristiques relatives à la dépose du produit 4, celui-ci étant directement déposé sous forme d'une galette plate 5' de hauteur d, cette distance d étant sensiblement égale à la distance entre la face terminale 25 de la buse de dépose 23 pourvue d'un orifice par exemple annulaire de dépose 24 et le biscuit 3.

Comme le montre à la figure 2b, à la position II, la distance entre la face 25 et la face supérieure du biscuit 3 est sensiblement égale à d, ce qui crée un espace de confinement dans lequel est distribué le produit 4 sous forme d'une galette 5'. La différence entre les distances e1 et e2 est choisie en fonction de la distance d qui définit la hauteur de la galette 5' de sorte que la galette de crème 5' occupe la surface désirée sur le biscuit.

En fin de phase de dépose (figure 2b - position 2), la galette de crème 5' est séparée de la tête de dépose par un dispositif de découpe tel qu'un coupe-fil 40 pourvu d'un fil de découpe 41 animé d'un mouvement de va-et-vient. On obtient ainsi (figure 2c - position III), un biscuit 3 sur lequel est disposé une rondelle de produit 5' dont la face supérieure est parallèle au biscuit.

Pour obtenir un sandwich, il suffit de poser sur la rondelle 5' un deuxième biscuit 3 sans que cette fois-ci il y ait besoin d'appuyer pour obtenir un étalement latéral et un écrasement du produit. Ceci permet d'obtenir un produit final présentant un fourrage 5' dont le bord externe 5" est relativement régulier, sans avoir à recourir à la complexité d'une technique telle que le stencil.

Comme on l'a vu ci-dessus, ce procédé convient à la dépose de tout produit alimentaire pâteux, semi-pâteux ou semi-liquide, susceptible d'être distribué par une pompe. Ce procédé est notamment utilisable pour des produits fragiles tels que les crèmes foisonnées et il permet également de distribuer des produits présentant des inclusions, par exemple des noisettes, morceaux de fruits, etc....

En outre, le dosage volumétrique est précis. En effet, comme la dépose ne s'accompagne pas d'une mise en pression susceptible d'affecter la texture du produit notamment l'alvéolation, et comme cette absence de mise en pression évite toute dilatation des éléments constituant la tête de dépose 10, notamment le soufflet 15, la tête de dépose 10 ne se déforme pas lors de la dépose et on est sûr d'obtenir un dosage précis et régulier.

La dépose peut s'effectuer, comme décrit, sur un support tel qu'un biscuit ou une génoise, etc.., mais elle peut être également réalisée directement sur le tapis 1. Dans ce cas, le produit alimentaire peut être en particulier une pâte crue , ce qui fait que le procédé peut être utilisé pour l'obtention de pâtons crus.

Du fait que, pour le mode de réalisation des figures 2a à 2c, le biscuit supérieur 3 est appliqué sans mise en pression étalant la rondelle 5', celui-ci peut être un biscuit ajouré pourvu d'ouvertures traversantes. Ce procédé permet ainsi un élargissement notable de la gamme des produits susceptibles d'être fabriqués avec un même appareillage.

## Revendications

1. Procédé de dépose sur une surface d'un produit alimentaire pompable non-liquide **caractérisé en ce qu'**il met en oeuvre un cycle comprenant :
- une diminution d'une quantité déterminée du volume d'une tête de dépose (10) présentant au moins un orifice de dépose (14, 24), de manière à délivrer une quantité calibrée du produit alimentaire (4).
- une augmentation de ce volume de 1a même quantité déterminée pour revenir au volume de départ ;
- et **en ce que** la tête de dépose (10) est alimentée en continu par ledit produit alimentaire à un débit tel que la quantité délivrée lors de chaque cycle est égale à ladite quantité déterminée.

2. Procédé selon la revendication 1, **caractérisé en ce que** la tête de dépose (10) présente une région de canal (11) dont la longueur peut être modifiée pour assurer la diminution et l'augmentation de volume.

3. Procédé selon la revendication 2, **caractérisé en ce que** la région de canal (11) présente un soufflet (15) dont la longueur est modifiée pour réaliser lesdites diminution et augmentation de volume.

4. Procédé selon une des revendications précédentes, **caractérisé en ce que** la dépose est réalisée sur une surface en mouvement (1,3), et **en ce que** la tête de dépose (10) est animée d'un mouvement qui lui permet de suivre le déplacement de la surface en mouvement (1, 3) au moins au moment de la dépose.

5. Procédé selon la revendication 4, **caractérisé en ce que** le mouvement de la tête de dépose (10) est un mouvement de balancier dont la période est égale à la période d'un cycle de dépose.

6. Procédé selon une des revendications 4 ou 5, **caractérisé en ce que** la surface en mouvement est un tapis de dépose (1).

7. Procédé selon une des revendications 4 ou 5, **caractérisé en ce que** la surface en mouvement est un support alimentaire (3).

8. Procédé selon la revendication 7, **caractérisé en ce que** ledit support alimentaire (3) est un biscuit, ou une gaufrette.

9. Procédé selon la revendication 8, **caractérisé en ce qu'**il comporte une étape de dépose d'un deuxième support alimentaire (3) sur le produit alimentaire.

10. Procédé selon une des revendications précitées, **caractérisé en ce que** lors de la dépose la distance entre la tête de dépose et ladite surface est telle que le produit déposé forme au moins un dôme qui se sépare de la tête de dépose (10) lors de la remontée de celle-ci.

11. Procédé selon une des revendications 1 à 9, **caractérisé en ce que** la dépose s'effectue avec une distance (d) entre la tête de dépose et ladite surface qui est telle que la quantité délivrée est confinée sous forme d'une galette (5) dont la hauteur est sensiblement égale à ladite distance (d) entre la tête de dépose (10) et ladite surface (1, 3).

12. Procédé selon la revendication 11, **caractérisé en ce qu'**il met en oeuvre un coupe-fil (40, 41) pour séparer, après la dépose, ladite galette (5) de la tête de dépose (10).

13. Dispositif de dépose sur une surface d'un produit alimentaire pompable non-liquide à l'aide d'une tête de dépose, **caractérisé en ce que** la tête de dépose (10) présente un dispositif d'actionnement (20, 30) pour faire varier d'une quantité déterminée le volume de la tête de dépose (10) selon un cycle comprenant successivement une diminution et une augmentation de ladite quantité déterminée du volume de la tête de dépose (10), de manière à délivrer, lors de chaque cycle, ladite quantité déterminée dudit produit alimentaire (4), et **en ce qu'**il présente un dispositif (P) d'alimentation en continu de la tête de dépose (10) par ledit produit alimentaire (4), à un débit correspondant aux quantités délivrées lors de cycles successifs.

14. Dispositif selon la revendication 13, **caractérisé en ce que** la tête de dépose (10) présente une région de canal (11) de longueur variable coopérant avec ledit dispositif d'actionnement (20, 30) pour réaliser ladite variation de volume.

15. Dispositif selon la revendication 14, **caractérisé en ce que** la région de canal (11) comporte un soufflet (15) coopérant avec ledit dispositif d'actionnement (20, 30) pour réaliser ladite variation de volume.

16. Dispositif selon une des revendications 13 à 15, **caractérisé en ce que** le dispositif d'actionnement présente un plateau (30) mobile en translation, coopérant avec la tête de dépose (10) pour en faire varier le volume.

17. Dispositif selon la revendication 16, **caractérisé en ce que** le plateau mobile (30) est commun à au moins deux dispositifs de dépose (10).

18. Dispositif selon une des revendications 13 à 17, **caractérisé en ce que** le dispositif de dépose (10) est disposé à proximité d'une surface en mouvement (1, 3) sur laquelle doit être effectuée ladite dépose.

19. Dispositif selon la revendication 18, **caractérisé en ce qu'**il comporte un dispositif d'entraînement pour imprimer à la tête de dépose (10), un mouvement de balancier de sorte que la tête de dépose (10) suive le déplacement de ladite surface en mouvement (1, 3), au moins lors de la dépose.

20. Dispositif selon une des revendications 13 à 19, **caractérisé en ce qu'**il comporte un coupe-fil (40, 41), permettant de séparer de la tête de dépose (10) , le produit déposé (3, 5).

## Claims

1. Method of depositing a non-liquid pumpable food product on a surface, **characterised in that** it operates a cycle which consists in:
- reducing the volume of a placement head (10) incorporating at least one applicator orifice (14, 24) by a given amount in order to deliver a calibrated quantity of the food product (4);
- increasing this volume by the same amount to restore the initial volume;
- the placement head (10) being continuously supplied with said food product at a flow rate such that the quantity delivered during each cycle is equal to said given amount.

2. Method as claimed in claim 1, **characterised in that** the placement head (10) has a passage region (11), the length of which can be adjusted in order to reduce and increase volume.

3. Method as claimed in claim 2, **characterised in that** the passage region (11) has a bellows (15), the length of which is adjusted to permit said reduction and increase in volume.

4. Method as claimed in one of the preceding claims, **characterised in that** the placement is made onto a moving surface (1, 3) and a motion is imparted to the placement head (10) enabling it to track the displacement of the moving surface (1, 3), at least at the instant of placement.

5. Method as claimed in claim 4, **characterised in that** the motion of the placement head (10) is a swinging motion, the period of which is equal to the period of a placement cycle.

6. Method as claimed in one of claims 4 or 5, **characterised in that** the moving surface is a placement belt (1).

7. Method as claimed in one of claims 4 or 5, **characterised in that** the moving surface is a food base (3) .

8. Method as claimed in claim 7, **characterised in that** said food base (3) is a biscuit or a wafer biscuit.

9. Method as claimed in claim 8, **characterised in that** it incorporates a step during which a second food base (3) is placed on the food product.

10. Method as claimed in one of the preceding claims, **characterised in that** during placement, the distance between the placement head and said surface is such that the deposited product forms at least a dome which is separated from the placement head (10) as the latter is raised.

11. Method as claimed in one of claims 1 to 9, **characterised in that** placement is effected at a distance (d) from placement head to said surface which is such that the delivered quantity is confined to the shape of a circular biscuit (5), the height of which is substantially the same as said distance (d) between the placement head (10) and said surface (1, 3).

12. Method as claimed in claim 11, **characterised in that** a wire cutter (40, 41) is used to separate said biscuit from the placement head (10) after placement.

13. Device for depositing a non-liquid pumpable food product on a surface with the aid of a placement head, **characterised in that** the placement head (10) has an actuating device (20, 30) for varying the volume of the placement head (10) by a given amount on the basis of a cycle involving successively reducing and increasing the volume of the placement head (10) by said given amount in order to deliver said given amount of said food product (4) during each cycle, and **in that** it has a device (P) for continuously supplying the placement head (10) with said food product (4) at a flow rate corresponding to the amounts delivered during successive cycles.

14. Device as claimed in claim 13, **characterised in that** the placement head (10) has a passage region (11) of variable length, co-operating with said actuating device (20, 30) in order to operate said variation in volume.

15. Device as claimed in claim 14, **characterised in that** the passage region (11) has a bellows (15) co-operating with said actuating device (20, 30) in order to operate said variation in volume.

16. Device as claimed in one of claims 13 to 15, **characterised in that** the actuating device has a plate (30) displaceable in translation, which co-operates with the placement head (10) in order to vary the volume thereof.

17. Device as claimed in claim 16, **characterised in that** the displaceable plate (30) is common to at least two placement devices (10).

18. Device as claimed in one of claims 13 to 17, **characterised in that** the placement device (10) is disposed in the vicinity of a moving surface (1, 3) onto which said placement is to be made.

19. Device as claimed in claim 18, **characterised in that** it has a driving device for imparting a swinging motion to the placement head (10) so that the placement head (10) tracks the displacement of said moving surface (1, 3), at least during placement.

20. Device as claimed in one of claims 13 to 19, **characterised in that** it has a wire cutter (40, 41) enabling the deposited product (3, 5) to be separated from the placement head (10).

## Patentansprüche

1. Verfahren zur Ablage eines pumpfähigen, nichtflüssigen Nahrungsmittels auf einer Fläche, **dadurch gekennzeichnet, daß** es einen Zyklus ausführt, der umfaßt:
- eine Verkleinerung des Volumens eines Ablagekopfs (10), der wenigstens eine Ablageöffnung (14, 24) aufweist, um eine bestimmte Menge, so daß eine kalibrierte Menge des Nahrungsmittels (4) abgegeben wird;
- eine Vergrößerung dieses Volumens um dieselbe bestimmte Menge, um wieder auf das Anfangsvolumen zu gelangen;
- und dadurch, daß der Ablagekopf (10) kontinuierlich bei einer solchen Durchsatzmenge mit dem Nahrungsmittel gespeist wird, daß die bei jedem Zyklus abgegebene Menge gleich der bestimmten Menge ist.

2. Verfahren nach Anspruch 1, **dadurch gekennzeichnet, daß** der Ablagekopf (10) einen Kanalbereich (11) aufweist, dessen Länge verändert werden kann, um die Volumenverkleinerung und -vergrößerung zu gewährleisten.

3. Verfahren nach Anspruch 2, **dadurch gekennzeichnet, daß** der Kanalbereich (11) einen Balg (15) aufweist, dessen Länge verändert wird, um die Volumenverkleinerung und -vergrößerung zu bewerkstelligen.

4. Verfahren nach einem der vorhergehenden Ansprüche, **dadurch gekennzeichnet, daß** die Ablage auf einer in Bewegung befindlichen Fläche (1, 3) erfolgt, und dadurch, daß der Ablagekopf (10) zu einer Bewegung angeregt wird, die ihm erlaubt, der Verschiebung der in Bewegung befindlichen Fläche (1, 3) zumindest im Augenblick der Ablage zu folgen.

5. Verfahren nach Anspruch 4, **dadurch gekennzeichnet, daß** die Bewegung des Ablagekopfs (10) eine Schwingbewegung ist, dessen Periode gleich der Periode eines Ablagezyklus ist.

6. Verfahren nach einem der Ansprüche 4 oder 5, **dadurch gekennzeichnet, daß** die in Bewegung befindliche Fläche ein Ablageförderband (1) ist.

7. Verfahren nach einem der Ansprüche 4 oder 5, **dadurch gekennzeichnet, daß** die in Bewegung befindliche Fläche ein Nahrungsmittelträger (3) ist.

8. Verfahren nach Anspruch 7, **dadurch gekennzeichnet, daß** der Nahrungsmittelträger (3) ein Keks oder eine Waffel ist.

9. Verfahren nach Anspruch 8, **dadurch gekennzeichnet, daß** es einen Schritt für die Ablage eines zweiten Nahrungsmittelträgers (3) auf das Nahrungsmittel beinhaltet.

10. Verfahren nach einem der vorhergehenden Ansprüche, **dadurch gekennzeichnet, daß** bei der Ablage der Abstand zwischen dem Ablagekopf und der Fläche derart ist, daß das abgelegte Produkt wenigstens eine Kuppe bildet, die sich vom Ablagekopf (10) beim Hochheben von diesem trennt.

11. Verfahren nach einem der Ansprüche 1 bis 9, **dadurch gekennzeichnet, daß** die Ablage mit einem solchen Abstand (d) zwischen dem Ablagekopf und der Fläche erfolgt, daß die abgegebene Menge in Form einer Scheibe (5) vorliegt, deren Höhe etwa gleich dem Abstand (d) zwischen dem Ablagekopf (10) und der Fläche (1, 3) ist.

12. Verfahren nach Anspruch 11, **dadurch gekennzeichnet, daß** es einen Fadenschneider (40, 41) einsetzt, um die Scheibe (5) nach der Ablage vom Ablagekopf (10) zu trennen.

13. Vorrichtung zur Ablage eines pumpfähigen, nichtflüssigen Nahrungsmittels auf einer Fläche mit Hilfe eines Ablagekopfes, **dadurch gekennzeichnet, daß** der Ablagekopf (10) eine Antriebsvorrichtung (20, 30) aufweist, um das Volumen des Ablagekopfes (10) um eine bestimmte Menge zu variieren, entsprechend einem Zyklus, der nacheinander eine Verkleinerung und eine Vergrößerung der besagten bestimmten Menge des Volumens des Ablagekopfes (10) umfaßt, so daß bei jedem Zyklus die bestimmte Menge des Nahrungsmittels (4) abgegeben wird, und dadurch, daß sie eine Vorrichtung (P) zum kontinuierlichen Speisen des Ablagekopfes (10) mit dem Nahrungsmittel (4) bei einer Durchsatzmenge aufweist, die den bei den aufeinanderfolgenden Zyklen abgegebenen Mengen entspricht.

14. Vorrichtung nach Anspruch 13, **dadurch gekennzeichnet, daß** der Ablagekopf (10) einen Kanalbereich (11) mit variabler Länge aufweist, der mit der Antriebsvorrichtung (20, 30) zusammenwirkt, um die besagte Volumenänderung zu bewerkstelligen.

15. Vorrichtung nach Anspruch 14, **dadurch gekennzeichnet, daß** der Kanalbereich (11) einen Balg (15) beinhaltet, der mit der Antriebsvorrichtung (20, 30) zusammenwirkt, um die besagte Volumenänderung zu bewerkstelligen.

16. Vorrichtung nach einem der Ansprüche 13 bis 15, **dadurch gekennzeichnet, daß** die Antriebsvorrichtung eine translatorisch bewegliche Platte (30) aufweist, die mit dem Ablagekopf (10) zusammenwirkt, um dessen Volumen zu variieren.

17. Vorrichtung nach Anspruch 16, **dadurch gekennzeichnet, daß** die bewegliche Platte (30) wenigstens zwei Ablagevorrichtungen (10) gemeinsam ist.

18. Vorrichtung nach einem der Ansprüche 13 bis 17, **dadurch gekennzeichnet, daß** sich die Ablagevorrichtung (10) benachbart zu einer in Bewegung befindlichen Fläche (1, 3) befindet, auf der die Ablage erfolgen soll.

19. Vorrichtung nach Anspruch 18, **dadurch gekennzeichnet, daß** sie eine Mitnahmeeinrichtung beinhaltet, um den Ablagekopf (10) in eine derartige Schwingbewegung zu versetzen, daß der Ablagekopf (10) der Verschiebung der in Bewegung befindlichen Fläche (1, 3) wenigstens bei der Ablage folgt.

20. Vorrichtung nach einem der Ansprüche 13 bis 19, **dadurch gekennzeichnet, daß** sie einen Fadenschneider (40, 41) beinhaltet, der es erlaubt, das abgelegte Produkt (3, 5) vom Ablagekopf (10) zu trennen.
